## Europäisches Patentamt

## European Patent Office

## Office européen des brevets

(11) Publication number: **0 155 763**
**B1**

## (12) EUROPEAN PATENT SPECIFICATION

(45) Date of publication of patent specification: **04.10.89**

(21) Application number: **85300992.6**

(22) Date of filing: **14.02.85**

(51) Int. Cl.⁴: **B 29 C 49/16**

(54) **Method of blow-moulding a biaxially oriented polyethylene terephthalate resin bottle-shaped container.**

(30) Priority: **15.02.84 JP 26802/84**

(43) Date of publication of application:
**25.09.85 Bulletin 85/39**

(45) Publication of the grant of the patent:
**04.10.89 Bulletin 89/40**

(84) Designated Contracting States:
**CH DE FR GB IT LI NL**

(56) References cited:
**GB-A-2 117 697**
**US-A-4 039 641**
**US-A-4 070 428**
**US-A-4 233 022**

(73) Proprietor: **Yoshino Kogyosho Co., Ltd.**
**No. 2-6, Ojima 3-chome, Koto-ku**
**Tokyo 136 (JP)**

(72) Inventor: **Sugiura, Hiroaki**
**2-6, Ojima 3-Chome**
**Koto-Ku Tokyo (JP)**
Inventor: **Tanaka, Fuminori**
**310, Minoridai**
**Matsudo-Shi Chiba-Ken (JP)**
Inventor: **Uesugi, Daisuke**
**2-6, Ojima 3-Chome**
**Koto-Ku Tokyo (JP)**

(74) Representative: **Heath, Derek James et al**
**BROMHEAD & CO. 19 Buckingham Street**
**London WC2N 6EF (GB)**

Courier Press, Leamington Spa, England.

## Description

The present invention relates to a method of blow-moulding a biaxially-oriented polyethylene terephthalate resin bottle-shaped container and to a container produced by the method.

Polyethylene terephthalate resin (hereinafter referred to as "PET") has stable physical properties, no public pollution, excellent transparency and high mechanical strength. Also, PET causes no pollution when incinerated. PET is widely used in the production of biaxially-oriented blow-moulded bottle-shaped containers, and is particularly useful for bottling foodstuffs.

PET bottle-shaped containers have a number of excellent properties as described above; however, blow-moulded bottle-shaped containers of biaxially-oriented PET which are not heat treated suffer remarkable deformation at temperatures of 70°C or more. Therefore, such PET bottle-shaped containers cannot be used to bottle retort food, which is heat-treated by allowing the food to stand for 30 min. at 120°C, or other heat-treated food. Accordingly, there is great demand for PET bottle-shaped containers which have high heat resistance.

There are several conventional methods of imparting heat resistance to PET bottle-shaped containers such as (1) heating a blowing mould during blow-moulding of a PET bottle-shaped container to a temperture higher than the target heat resistance temperature value to increase the density of the PET bottle-shaped container; (2) heat-setting a PET bottle-shaped container after blow-moulding to remove residual strain produced by blow-moulding; and (3) blow-moulding an intermediate mould parison or piece by first moulding a primary blow-moulded container, then reheating it at approximately 110°C, and finally blowing it again to produce a bottle-shaped container.

In method (1), the mouldability of the PET decreases as the mould temperature rises. According to this method, the PET is heat resistant up to a maximum of approximately 100°C. This PET cannot be used for bottle-shaped containers containing food which is heat-treated at temperatures much higher than 100°C. The methods (2) and (3) of imparting heat resistance to the PET bottle-shaped container cannot expect the heat resistance higher than the method (1).

GB—A—2117697 (Owens-Illinois Inc.), upon which the independent method claim 1 is based, discloses a method of making a high density, partially crystalline, biaxially oriented, heat set, hollow poly(ethylene terephthalate) plastic article comprising

(1) enclosing a tubular parison of said poly(ethylene terephthalate), having a closed end and an open end destined to form the neck or finish of the hollow article, within a blow mould, which parison is at a first temperature range, which first temperature range is conducive to orientation during stretching,

(2) while the parison is still at the first temperature range, expanding the parison into contact and conformance with the blow mould walls by inflation with a gas under pressure to make a hollow blown article, the said stretching and expanding under the resulting strain conditions resulting in biaxial orientation and concomitant partial crystallization, and then while the article walls are still inflated in contact with the mould walls, raising the temperature of the article to a higher second temperature in the range of 200 to 250°C., except for the neck or finish portion of the article which is kept at a low temperature such that crystallization is minimized or eliminated so that the neck or finish portion remains transparent,

(3) wherein the heating in the second temperature range heat sets the body of the article by causing further crystallization thereof as indicated by density increase,

(4) and while the hollow article is still at a shrinkage-resisting pressure exceeding atmospheric, cooling the article to a temperature at which it maintains its shape when not pressurized, but not below 100°C., and

(5) thereafter reducing the gas pressure within the article to essentially ambient pressure.

It is the object of the invention to provide a method of blow-moulding a biaxially-oriented PET bottle-shaped container having very high heat resistance.

This object is solved, according to the present invention, in that there is provided a method of blow-moulding a biaxially-oriented polyethylene terephthalate resin bottle-shaped container which includes the steps of heating a preform at 100 to 120 degrees C, biaxial-orientation blow-moulding the preform in a primary blowing mould heated at 110 to 230 degrees C to form a primary intermediate moulded bottle-shaped article, and thermally contracting the primary-intermediate moulded bottle-shaped article by heating it at a temperature higher by 20 degrees C or more than the primary blow moulding temperature to form a secondary intermediate moulded bottle-shaped article, and blow-moulding the secondary intermediate moulded bottle-shaped article in a secondary blowing mould heated at 100 to 150 degrees C to form a bottle-shaped container.

A better understanding of the present invention will become more fully apparent from the following illustrative description when read in conjunction with the accompanying drawings, in which:

Fig. 1 is a longitudinal sectional view depicting the primary blow-moulding state of a primary intermediate moulded parison or piece according to the present invention;

Fig. 2 is a longitudinal sectional view showing the secondary blow-moulding state of a secondary intermediate moulded piece according to the present invention; and

Fig. 3 is a graphic diagram showing the relationship between the density and the blow-moulding temperature of the blow-moulded bottle-shaped container of the present invention.

An embodiment of the present invention will now be described in detail with reference to the accompanying drawings.

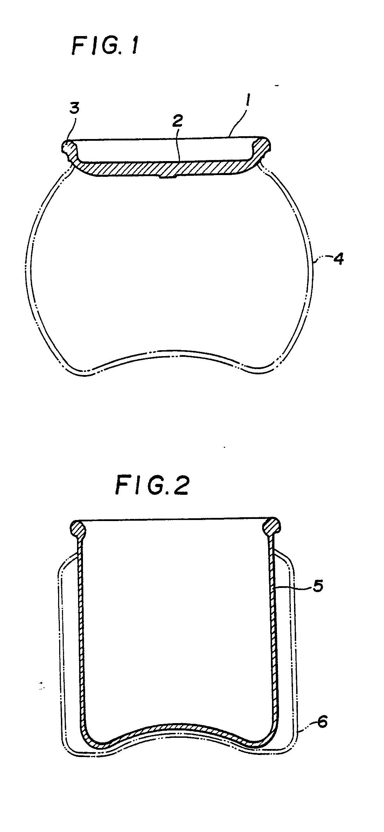

With reference to Fig. 1, a method of blow-moulding a biaxially-oriented PET bottle-shaped container according to the present invention comprises the steps of: heating the body portion 2 of a preform 1, which is formed in a desired shape in advance, at 100 to 120°C until the temperature approaches but does not reach the thermal crystallization temperature of the PET, biaxial-orientation blow-moulding the preform in a primary blowing mould heated at 110° to 230°C to form a primary intermediate moulded bottle-shaped piece 4, heating the primary intermediate moulded bottle-shaped piece 4 at 130° to 255°C (which is in a range so as not to exceed the temperature 255°C immediately before the melting point of polyethylene terephthalate from 130°C) or at a temperature which is 20°C or higher than the primary blowing mould temperature to form a secondary intermediate moulded bottle-shaped piece 5, and blow-moulding the secondary intermediate moulded bottle-shaped piece 5 in a secondary blowing mould heated at 100° to 150°C, which is higher than the sterilizing temperature of the content filled in the moulded bottle-shaped container 6, to form a final bottle-shaped container 6.

More particularly, the method of blow-moulding a biaxially-oriented PET bottle-shaped container according to the present invention includes the first step of injection moulding in advance a preform 1 in a desired shape, the second step of thermally crystallizing, without orienting deformation, a neck portion of the bottle-shaped container 6 of the shape which remains in the shape at the injection moulding time, and the third step of blow-moulding the body of the bottle-shaped container 6.

The preform 1 is injection-moulded by ordinary injection moulding techniques. In the exemplified embodiment, the injection-moulded preform 1 is formed in dish shape as shown by solid lines in Fig. 1. The preform 1 has a neck portion 3 and a body portion 2. The body portion 2 becomes the body, including a bottom, of the biaxially-oriented blow-moulded bottle-shaped container 6.

The preform 1 is orientation area magnified 5 to 13 times. The orienting density becomes 1.36 or more. The body 2 is thus not thermally crystallized even at the mould temperature of 110° to 230°C of the primary blowing mould at the blow-moulding time.

Thus, the body 2 is formed in the primary intermediate moulded piece 4 without thermal crystallization even at the mould temperature of 110° to 230°C (which is higher than the crystallizing temperature) of the primary blowing mould.

The peripheral end of a connecting portion between the body portion 2 and the neck portion 3 and the central portion of the body portion are hardly oriented as compared with other parts of the body portion 2 and are also readily crystallized. These portions are therefore preferably reduced in thickness relatively to the other parts of the body portion 2 so as to be readily oriented.

The neck portion 3 of the preform 1 is, preferably, thermally crystallized or whitened prior to biaxial-orientation blow-moulding the preform to form the primary intermediate moulded bottle-shaped piece 4. The whitening of the neck portion 3 may be performed by sufficiently heating the neck portion 3 to crystallize the PET, followed by gradual cooling. It should be noted, however, that all deformation of the neck portion 3 should be avoided when whitening the neck portion 3. Particularly, deterioration of the degree of the circuitry of the neck portion 3 should be avoided since such deformation would largely reduce the function of the final blow-moulded bottle-shaped container 6.

After the neck portion 3 of the preform 1 is whitened in this manner, the preform 1 is blow-moulded to form the bottle-shaped container 6. The blow-moulding step involves biaxial-orientation blow-moulding the preform 1 to form a primary intermediate moulded bottle-shaped piece 4, heating the primary intermediate moulded bottle-shaped piece 4 to thermally contract it and form a secondary intermediate moulded bottle-shaped piece 5, and blow-moulding the secondary intermediate moulded bottle-shaped piece 5 to form a final bottle-shaped container 6.

The step of biaxial-orientation blow-moulding the preform 1 to form the primary intermediate moulded bottle-shaped piece 4 is performed by first heating the body portion 2 of the preform 1 at 100 to 120°C until the temperature approaches but does not reach the thermal crystallization temperature of the PET.

Next, the preform 1 is blow-moulded in a blow mould heated at 110° to 230°C to form the primary intermediate bottle-shaped piece 4. The primary intermediate moulded bottle-shaped piece 4 is oriented in a range that the area magnification of the preform 1 to the primary intermediate moulded bottle-shaped piece 4 is 5 to 13 times so that the orienting magnification of the resin becomes 1.36 or more so as to prevent the bottle-shaped piece 4 from thermally crystallizing by the heating temperature of the primary mould and the heating temperature of the secondary intermediate moulded piece.

The primary intermediate moulded bottle-shaped piece 4 is then heated to thermally contract it to form the secondary intermediate moulded bottle-shaped piece 5. This contracting step is performed to prevent thermal deformation by eliminating residual stress developed in the blow-moulded piece 4 from biaxial-orientation blow-moulding. The orientation blow-moulded portion of the primary intermediate moulded bottle-shaped piece 4 is deformed by the internal residual stress by heating the primary intermediate moulded bottle-shaped piece 4 at 130° to 255°C or a temperature which is 20°C higher than the primary blowing mould temperature, thereby to eliminate the residual stress. The deformation produced by the elimination of the internal residual stress acts to contract the orientation-moulded portion of the primary intermediate moulded bottle-shaped piece 4. Consequently, the orientation-moulded portion of the secondary intermediate moulded bottle-shaped piece 5 is moulded by this contraction deformation.

The body portion of the secondary intermediate moulded bottle-shaped piece 5 formed by the contraction deformation is predetermined in the orienting magnification from the preform 1 to the primary intermediate moulded piece 4 and the size of the primary intermediate moulded piece 4 to be substantially equal to or slightly smaller than the orientation-moulded body portion of the final bottle-shaped container 6 as shown in Fig. 2.

Finally, the secondary intermediate moulded bottle-shaped piece 5 is blow-moulded to form the final bottle-shaped container 6. The secondary intermediate moulded bottle-shaped piece 5, thermally contracted by heating at 130° to 255°C or at a temperature which is 20°C or higher than the primary blow mould temperature as described above, is placed in the secondary blowing mould which is heated at a temperature of 100° to 150°C. The temperature of the secondary blowing mould is several degrees greater than the maximum temperature the moulded bottle-shaped container 6 will be subjected to during use.

The body shape of the blow-moulded portion of the secondary intermediate moulded bottle-shaped piece 5 is substantially equal to or slightly smaller than the corresponding body shape of the bottle-shaped container 6 as described above. Accordingly, the orientation magnification from the secondary intermediate moulded bottle-shaped piece 5 to the final bottle-shaped container 6 is quite small, and consequently a stress to be created when the bottle-shaped container 6 moulded from the secondary intermediate moulded bottle-shaped piece 5 is orientation-moulded, is almost not generated.

Further, since the bottle-shaped container 6 is blow-moulded by a secondary blowing mould heated at a temperature greater than the temperature the bottle-shaped container will be subjected to during use, the bottle-shaped container 6 is heatset by the secondary blowing mould, and therefore the bottle-shaped container 6 has no residual stress as well as high heat resistance.

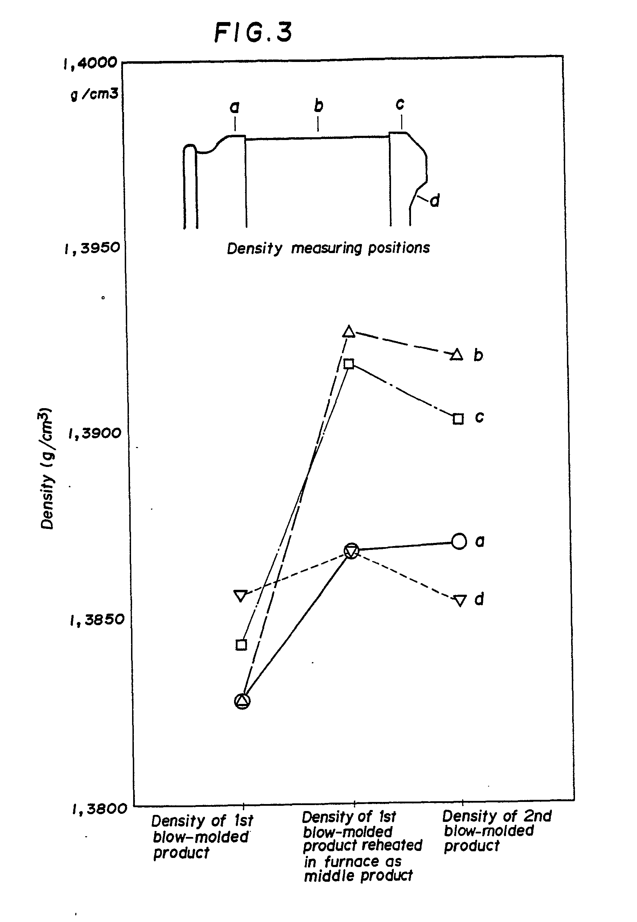

Fig. 3 shows the relationship between the density of the moulding material at the respective moulding steps and the mould temperatures.

A specific example of the method of blow-moulding a biaxially-oriented PET bottle-shaped container according to the present invention will now be described.

A preform 1 was biaxial-orientation blow-moulded to form a primary intermediate moulded bottle-shaped piece 4. The preform was heated to a temperature of 115°C and was blow-moulded at a primary blowing mould temperature of 180°C under a blowing pressure of 25 kg/cm² for a blowing time of 1.4 sec. The primary intermediate moulded bottle-shaped piece 4 was then heated and thermally contracted to form a secondary intermediate moulded bottle-shaped piece 5 at a heating temperature of 225°C. The secondary intermediate moulded bottle-shaped piece 5 was blow-moulded at a secondary blowing mould temperature of 140°C under a blowing pressure of 30 kg/cm² for a blowing time of 4.4 sec. to form the final blow-moulded bottle-shaped container 6.

The heat resistance of the blow-moulded bottle-shaped container 6 was then tested by immersing in the state without a cap for 30 minutes in a tank of glycerin heated at 120°C. The bottle-shaped container 6 was then removed from the glycerin and water-cooled. The volumetric variation of the container before heating and after heating was measured. The volumetric rate of change of the bottle-shaped container 6 was found to be 0.33%. From this result, it is apparent that a PET bottle-shaped container having sufficiently high heat resistance can be provided by the present invention.

According to the present invention as described above, the method of blow-moulding a PET bottle-shaped container provides a blow-moulded bottle-shaped container having to residual stress and having extremely high heat resistance. The heat resistance temperature value is remarkably increased when compared with that of a conventional container.

**Claims**

1. A method of blow-moulding a biaxially-oriented polyethylene terephthalate resin bottle-shaped container which includes the steps of heating a preform (1) at 100 to 120 degrees C, biaxial-orientation blow-moulding the preform in a primary blowing mould heated at 110 to 230 degrees C to form a primary intermediate moulded bottle-shaped article (4), and thermally contracting the primary-intermediate moulded bottle-shaped article (4) by heating it at a temperature higher by 20 degrees C or more than the primary blow moulding temperature to form a secondary intermediate moulded bottle-shaped article (5), and blow-moulding the secondary intermediate moulded bottle-shaped article in a secondary blowing mould heated at 100 to 150 degrees C to form a bottle-shaped container (6).

2. A method according to claim 1, wherein the primary intermediate moulded article (4) is heated at a temperature in the range 130 to 255 degrees C to form the secondary intermediate article (5).

3. A method according to claim 1 or claim 2, wherein the orientation-moulded portion of said secondary intermediate molded bottle-shaped article (5) is substantially the same size as or slightly smaller than the orientation-moulded portion of the bottle-shaped container (6).

4. A method according to any one of claims 1—3, wherein the preform (1) is orientation area magnified 5 to 13 times to form the primary intermediate moulded bottle-shaped article (4) and wherein the secondary blowing mould has a mould size equal to or slightly smaller than the secondary intermediate moulded-bottle-shaped article (5) and smaller than the primary blowing mould size.

5. A method according to any preceding claim, wherein the preform (1) has a neck portion (3) and a body portion (2), the body portion having a dish shape.

6. A method according to claim 5, wherein the neck portion (3) of the preform (1) is thermally crystallized before the preform is blow-moulded in the primary blowing mould.

7. A biaxially-oriented polyethylene terephthalate resin bottle-shaped container when blow-moulded by the process of any one of the preceding claims.

**Patentansprüche**

1. Verfahren zum Blasformen eines aus einem biaxial-orientierten Polyethylenterephthalatharz gebildeten flaschenförmigen Behälters, umfassend die Stufen des Erhitzens einer Vorform (1) auf 100 bis 120°C, biaxiales Blasformen der Vorform in einer ersten auf 110 bis 230°C erhitzten Blasform unter Ausbildung eines ersten zwischengeformten flaschenförmigen Gegenstandes (4) und Wärmeschrumpfen des ersten zwischengeformten flaschenförmigen Gegenstandes (4) bei einer Temperatur, die um 20°C oder mehr höher als die erste Blasformtemperatur ist, unter Ausbildung eines zweiten zwischengeformten flaschenförmigen Gegenstandes (5) und Blasformen des zweiten zwischengeformten flaschenförmigen Gegenstandes in einer zweiten, auf 100 bis 150°C erhitzten Blasform unter Ausbildung eines flaschenförmigen Behälters (6).

2. Verfahren gemäß Anspruch 1, bei dem der erste zwischengeformte Gegenstand (4) auf eine Temperatur im Bereich von 130 bis 255°C unter Ausbildung des zweiten zwischengeformten Gegenstandes (5) erhitzt wird.

3. Verfahren gemäß Anspruch 1 oder Anspruch 2, bei dem der unter Orientierung geformte Teil des zweiten zwischengeformten flaschenförmigen Gegenstandes (5) im wesentlichen die gleiche Größe oder etwas kleiner ist als der Orientierungs-geformte Teil des flaschenförmigen Behälters (6).

4. Verfahren gemaß einem der Ansprüche 1 bis 3, bei dem die Vorform (1) eine Orientierungszone, die um das 5- bis 13-fache vergrößert ist, zur Ausbildung des ersten zwischengeformten flaschenförmigen Gegenstandes (4) ist, und worin die zweite Blasform eine Formgröße hat, die gleich oder etwas kleiner ist als der zweite zwischengeformte flaschenförmige Gegenstand (5) und kleiner ist als die erste Blasform.

5. Verfahren gemäß einem der vorhergehenden Ansprüche, bei dem die Vorform (1) einen Halsteil (3) und einen Körperteil (2) hat, und wobei der Körperteil schalenförmig ist.

6. Verfahren gemäß Anspruch 5, bei dem der Halsteil (3) de Vorform (1) wärmekristallisiert wird, bevor die Vorform in der ersten Blasform blasgeformt wird.

7. Biaxial-orientierter flaschenförmiger Behälter aus Polyethylenterephthalatharz, blasverformt nach einem Verfahren gemäß einem der vorhergehenden Ansprüche.

**Revendications**

1. Procédé de moulage par soufflage d'un récipient en forme de bouteille en résine téréphtalate de polyéthylène à orientation biaxiale, qui comprend les étapes consistant à chauffer une préforme (1) à une température de 100 à 120°C, à mouler par soufflage avec orientation biaxiale la préforme dans un moule de soufflage primaire chauffé à une température de 110 à 230°C pour former un article (4) en forme de bouteille moulé intermédiaire primaire, et à contracter thermiquement l'article (4) en forme de bouteille moulé intermédiaire primaire en le chauffant à une température supérieure de 20°C ou plus à la température de moulage par soufflage primaire pour former un article (5) en forme de bouteille moulé intermédiaire secondaire, et à mouler par soufflage l'article en forme de bouteille moulé intermédiaire secondaire dans un moule de soufflage secondaire chauffé à une température de 100 à 150°C pour former un récipient (6) en forme de bouteille.

2. Procédé selon la revendication 1, dans lequel l'article moulé intermédiaire primaire (4) est chauffé à une température dans la gamme de 130 à 255°C pour former l'article intermédiaire secondaire (5).

3. Procédé selon la revendication 1 ou la revendication 2, dans lequel la partie moulée avec orientation dudit article (5) en forme de bouteille moulé intermédiaire secondaire est sensiblement de même dimension ou légèrement plus petite que la partie moulée avec orientation du récipient (7) en forme de bouteille.

4. Procédé selon l'une quelconque des revendications 1—3, dans lequel la préforme (1) est soumise à un agrandissement de surface d'orientation de 5 à 13 fois pour former l'article (4) en forme de bouteille moulé intermédiaire primaire, et dans lequel le moule de soufflage secondaire présente une dimension égale ou légèrement inférieure à celle de l'article (5) en forme de bouteille moulé intermédiaire secondaire et inférieure à la dimension du moule de soufflage primaire.

5. Procédé selon l'une quelconque des revendications précédentes, dans lequel la préforme (1) comporte une partie de col (3) et une partie de corps (2), la partie de corps ayant une forme de cuvette.

6. Procédé selon la revendication 5, dans lequel la partie de col (3) de la préforme (1) est cristallisée thermiquement avant que la préforme soit moulée par soufflage dans le moule de soufflage primaire.

7. Récipient en forme de bouteille, en résine téréphtalate de polyéthylène à orientation biaxiale, moulé par soufflage par le procédéselon l'une quelconque des revendications précédentes.

FIG. 1

FIG.2

## FIG.3

Density measuring positions

Density (g/cm³)

Density of 1st blow-molded product

Density of 1st blow-molded product reheated in furnace as middle product

Density of 2nd blow-molded product